# FASCICULE DE BREVET EUROPEEN

(11) **EP 0 442 773 B1**
(45) Date de publication et mention de la délivrance du brevet: **25.08.1993**
(21) Numéro de dépôt: 91400235.7
(22) Date de dépôt: 31.01.1991
(51) Int. Cl.: B60J 7/02, B60J 10/12

(54) **Cache de mécanisme, notamment pour toit ouvrant de véhicule automobile**
Getriebeabdeckung, insbesondere für Kraftfahrzeugschiebedach
Mechanism cover, especially for motor vehicle sliding roof

(30) Priorité: 02.02.1990 FR 9001225
(43) Date de publication de la demande: 21.08.1991
(73) Titulaire: FRANCE DESIGN, F-79140 Le Pin (FR)
(72) Inventeur: Cheron, Christian, F-49000 Angers (FR); de Gaillard, François, F-85390 Mouilleron en Pareds (FR)
(74) Mandataire: Rodhain, Claude

(56) Documents cités:
- FR-A- 2 518 465
- GB-A- 2 167 357

## Description

L'invention concerne un cache de mécanisme d'ouverture et de fermeture d'un panneau mobile par rapport à une surface fixe, notamment pour toit ouvrant d'un véhicule automobile, le mécanisme comprenant un profilé de guidage d'éléments d'articulation du panneau mobile.

De manière générale, le mécanisme d'articulation d'un panneau mobile de toit ouvrant d'un véhicule automobile est visible depuis l'intérieur de l'habitacle du véhicule, notamment quand le panneau mobile est entrebâillé vers l'extérieur de l'habitacle, fermé ou coulissé sous le pavillon du véhicule. Un tel mécanisme est connu par exemple par GB-A-2 167 357.

Outre le caractère inesthétique de l'aspect mécanique de ces pièces, il y a des risques à laisser visibles ce mécanisme du fait que des objets ou des particules de poussière introduits dans le mécanisme peuvent entraîner un disfonctionnement de celui-ci et notamment son coincement.

A cet effet, on connaît déjà des caches de mécanisme d'articulation de panneaux mobiles pour toit ouvrant de véhicule automobile du type balai-brosse ou lame de caoutchouc. Cependant, ces caches de mécanisme connus possèdent une tenue dans le temps médiocre.

L'objectif de l'invention est de remédier à ce problème en proposant un cache de mécanisme, comprenant une pièce de finition s'étendant longitudinalement le long du profilé de guidage et pivotant autour d'un axe parallèle à la direction longitudinale du profilé de guidage, des moyens élastiques de rappel pour amener la pièce de finition depuis une position abaissée où la largeur de la pièce de finition est tangente à la surface du panneau mobile vers une position relevée où la largeur de la pièce de finition est sensiblement perpendiculaire à la surface du panneau mobile et en appui sur la surface du panneau mobile par un de ses côtés longitudinaux de manière que le mouvement du panneau mobile par rapport à la surface fixe commande le pivotement de la pièce de finition.

De cette manière, la pièce de finition vient occulter le profilé de guidage et les éléments d'articulation quelle que soit la position du panneau mobile par rapport au pavillon. En outre, grâce à l'articulation de la pièce de finition, il est facile d'accéder au mécanisme d'articulation du panneau mobile sans démonter le cache de mécanisme notamment pour contrôler son fonctionnement, en manoeuvrant la pièce de finition de manière à lui faire prendre la position abaissée. Ce contrôle est particulièrement important lors du montage du dispositif d'ouverture de toit sur un véhicule et implique d'accéder aussi aux organes de fixation du dispositif d'ouverture de toit pour régler son positionnement sur le pavillon du véhicule. Du fait que le pivotement de la pièce de finition est commandé par le mouvement du panneau mobile par rapport à la surface fixe, la pièce de finition suit automatiquement les évolutions spatiales du panneau mobile.

Selon une autre caractéristique de l'invention, le cache de mécanisme comprend en outre un organe de butée pour maintenir la pièce de finition en position relevée quand son côté longitudinal n'est pas en contact avec la surface du panneau mobile. Ainsi, quand le panneau mobile est en position entrebâillée à l'extérieur de l'habitacle, la pièce de finition est maintenue dans une position permettant son articulation lorsque le panneau mobile sera abaissé, par exemple lors de la fermeture du pavillon.

D'autres caractéristiques et avantages de l'invention seront mieux compris à la lecture de la description qui va suivre et des dessins annexés dans lesquels :
- la figure 1 représente une vue de dessus en perspective d'un toit ouvrant d'un véhicule automobile,
- la figure 2 représente de façon schématique, le cache de mécanisme selon la coupe A-A de la figure 1 quand le panneau mobile est en position de coulissement sous le pavillon,
- la figure 3 représente de façon schématique le cache de mécanisme selon la coupe A-A de la figure 1 quand le panneau mobile est en position de fermeture du pavillon.

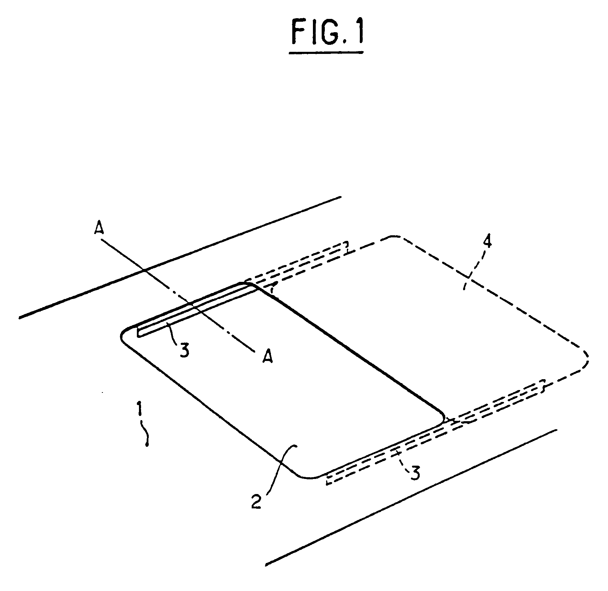

La figure 1 représente une vue de dessus en perspective d'un toit ouvrant de véhicule automobile fermé par un pavillon 1 dans lequel est pratiquée une ouverture 2 fermable par un panneau mobile 4 de forme complémentaire.

Un profilé 3 est disposé sur chaque bord latéral de l'ouverture 2 en dessous du pavillon 1, le profilé étant adapté pour guider des éléments d'articulation 10, du panneau mobile de manière à permettre notamment son entrebâillement au-dessus du pavillon ou son coulissement sous le pavillon du véhicule.

La figure 1 représente plus particulièrement le panneau mobile 4 en position de coulissement sous le pavillon 1 du véhicule.

Dans les différentes positions du panneau mobile 4, à savoir en position d'entrebâillement, de fermeture ou de coulissement, le profilé de guidage 3 et les éléments d'articulation 10 sont visibles dans la zone d'ouverture depuis l'intérieur du véhicule.

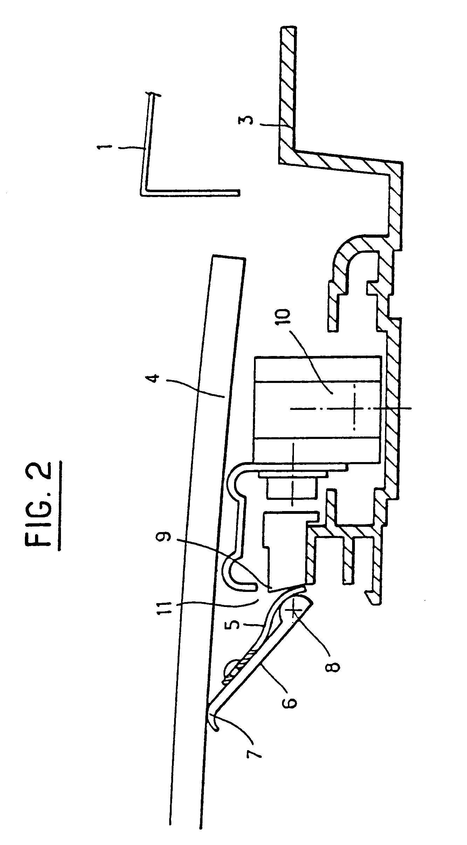

Pour occulter ce mécanisme, on prévoit un cache de mécanisme visible en figure 2. Le cache de mécanisme selon l'invention comporte une pluralité de moyens élastiques de rappel 5 du type par exemple ressort à fil à enroulement travaillant en torsion, ou lame élastique travaillant en flexion, répartis sur le profilé 3 dans la zone latérale de l'ouverture 2. Chaque moyen élastique est fixé par une première extrémité sur le profilé 3 par moulage, collage ou fixation par vis, et porte une pièce de finition 6 s'étendant longitudinalement le long du profilé 3 dans la zone d'ouverture 2.

De façon préférentielle, l'autre extrémité de chaque moyen élastique 5 est noyée dans l'épaisseur de la pièce de finition 6 ou fixée à celle-ci de manière démontable.

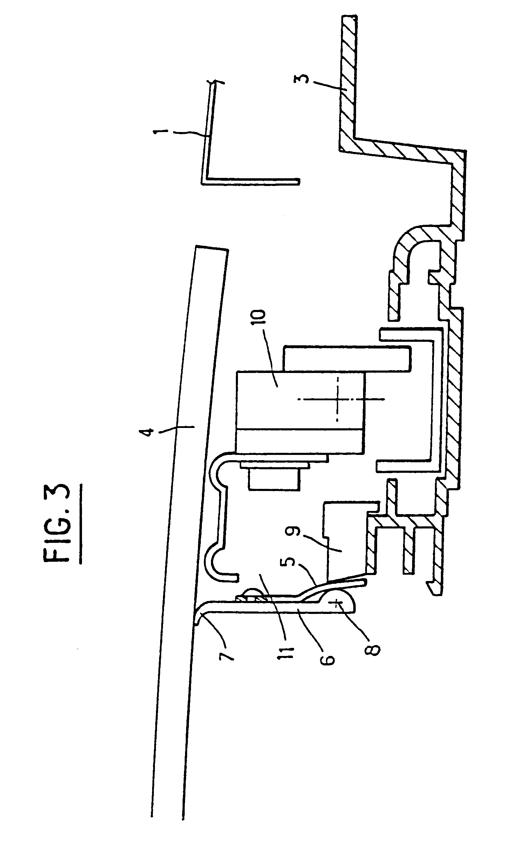

La pièce de finition 6, de forme sensiblement rectangulaire, comporte un côté longitudinal 7 en contact étroit avec la surface du pavillon 4, tandis que les moyens élastiques 5 font pivoter la pièce de finition 6 autour d'un axe 8 sensiblement parallèle à la direction longitudinale du profilé de guidage 3 depuis une position abaissée représentée en figure 2 où la largeur de la pièce de finition 6 est tangente à la surface du panneau mobile 4 lorsque celui-ci se trouve en position de coulissement sous le pavillon vers une position relevée représentée en figure 3 où la largeur de la pièce de finition 6 est sensiblement perpendiculaire à la surface du panneau mobile 4 lorsque celui-ci se trouve en position de fermeture de manière à occulter, dans au moins ces deux positions du panneau mobile, l'espace 11 entre la surface du panneau mobile 4 et le profilé de guidage 3.

Les moyens élastiques de rappel 5 sont montés de manière à travailler en position abaissée de la pièce de finition pour faire pivoter automatiquement celle-ci vers la position relevée lorsque le panneau mobile 4 s'élève par rapport au profilé de guidage 3.

Les moyens élastiques de rappel 5 continuent à travailler même en position relevée de la pièce de finition 6. On prévoit une butée 9 pour arrêter le débattement de la pièce de finition 6 entraînée en rotation par les moyens élastiques de rappel 5 lorsque le panneau mobile 4 est entrebâillé vers l'extérieur de l'habitacle du véhicule et de ce fait libère la pièce de finition, celle-ci étant alors maintenue dans la position relevée où sa largeur est sensiblement perpendiculaire à la surface du pavillon.

De façon avantageuse, selon l'invention, le pivotement de la pièce de finition 6 depuis la position relevée vers la position abaissée, est commandée automatiquement par le mouvement vertical du panneau mobile 4 par rapport au pavillon 1 venant s'appuyer sur le côté longitudinal 7 de la pièce de finition et s'opposant à l'action des moyens élastiques de rappel 5.

## Revendications

1. Un dispositif d'ouverture et de fermeture d'une surface fixe, notamment un toit ouvrant pour véhicule automobile, comprenant un panneau mobile (4) de forme complémentaire à une ouverture aménagée dans la surface fixe (1), un mécanisme d'articulation du panneau mobile comprenant au moins un profilé de guidage (3) d'éléments d'articulation (10) du panneau mobile, caractérisé en ce qu'il comporte une pièce de finition (6) s'étendant longitudinalement le long du profilé de guidage (3) et pivotant autour d'un axe (8) parallèle à la direction longitudinale du profilé de guidage, des moyens élastiques de rappel (5) pour amener la pièce de finition (6) depuis une position abaissée où la largeur de la pièce de finition est tangente à la surface du panneau mobile (4) vers une position relevée où la largeur de la pièce de finition est sensiblement perpendiculaire à la surface du panneau mobile (4) et en appui sur la surface du panneau mobile par un de ses côtés longitudinaux (7) de manière que le mouvement du panneau mobile par rapport à la surface fixe commande le pivotement de la pièce de finition.

2. Le dispositif d'ouverture et de fermeture d'une surface fixe selon la revendication 1, caractérisé en ce qu'il comporte en outre un organe de butée (9) pour maintenir la pièce de finition (6) en position relevée quand son côté longitudinal (7) n'est pas en contact avec la surface du panneau mobile (4).

## Patentansprüche

1. Vorrichtung zum Öffnen und Schließen einer feststehenden Fläche, insbesondere ein Kraftfahrzeugschiebedach, mit einer beweglichen, einer in der feststehenden Fläche (1) ausgesparten Öffnung komplementären Platte (4), wobei ein Anlenkmechanismus der beweglichen Platte wenigstens ein Führungsprofil (3) für die Anlenkvorrichtungen (10) der beweglichen Platte umfaßt, dadurch gekennzeichnet, daß sie aufweist ein sich längs des Führungsprofils (3) in Längsrichtung erstreckendes und um eine zur Längsrichtung des Führungsprofils parallele Achse (9) schwenkbares Abdeckteil (6), elastische Rückstelleinrichtungen (5), um das Abdeckteil (6) aus einer abgesenkten Stellung, in der die Breitenrichtung des Abdeckteils zu der Fläche der beweglichen Platte (4) tangential verläuft, in eine angehobene Stellung bringen, in der das Abdeckteil mit seiner Breitenrichtung zu der Fläche der beweglichen Platte (4) im wesentlichen senkrecht steht und mit einer seiner Längsseiten (7) auf der Fläche der beweglichen Platte abgestützt ist, so daß die Verschiebung der beweglichen Platte gegenüber der feststehenden Fläche das Verschwenken des Abdeckteils bewirkt.

2. Vorrichtung zum Öffnen und Schließen einer feststehenden Fläche gemäß Anspruch 1, dadurch gekennzeichnet, daß sie weiterhin einen Anschlag (9) aufweist, der das Abdeckteil (6) in einer angehobenen Stellung hält, wenn dessen Längsseite (7) nicht mit der Fläche der beweglichen Platte (4) in Berührung ist.

## Claims

1. A device for opening and closing a fixed surface, particularly a sunroof for a motor vehicle, comprising a moving panel (4), whose shape is complementary to an opening made in the fixed surface (1), a mechanism for articulating the moving panel comprising at least one section (3) for guiding articulation elements (10) of the moving panel, characterised in that it includes a finishing component (6) extending longitudinally along the guide section (3) and pivoting about an axis (8) which is parallel to the longitudinal direction of the guide section, elastic return means (5) for bringing the finishing component (6) from a lowered position in which the width of the finishing component is tangential to the surface of the moving panel (4) into a raised position in which the width of the finishing component is substantially perpendicular to the surface of the moving panel (4) and bearing on the surface of the moving panel via one of its longitudinal sides (7) so that the movement of the moving panel with respect to the fixed surface actuates the pivoting of the finishing component.

2. The device for opening and closing a fixed surface according to Claim 1, characterised in that it further comprises a stop member (9) for keeping the finishing component (6) in the raised position when its longitudinal side (7) is not in contact with the surface of the moving panel (4).
